# EUROPEAN PATENT APPLICATION

(11) **EP 3 572 471 A1**
(43) Date of publication of application: **27.11.2019**
(21) Application number: 18742144.1
(22) Date of filing: 15.01.2018
(51) Int. Cl.: C09D 11/328, B41J 2/01, B41M 5/00, C09D 11/54, D06P 1/38, D06P 1/382, D06P 5/00, D06P 5/20

(54) **INK COMPOSITION FOR INKJET TEXTILE PRINTING AND TEXTILE PRINTING METHOD FOR FIBERS WITH USE OF SAME**

(30) Priority: 23.01.2017 JP 2017009234
(71) Applicant: Nippon Kayaku Kabushiki Kaisha, Tokyo 100-0005 (JP)
(72) Inventor: TAKEDA, Michiaki, kita-ku, Tokyo 1158588 (JP); SHIMIZU, Shinsuke, Kita-ku, Tokyo 1158588 (JP); TANAKA, Yuki, Kita-ku, Tokyo 1158588 (JP)
(74) Representative: Maiwald Patent- und Rechtsanwaltsgesellschaft mbH
(86) International application number: PCT/JP2018/000762
(87) International publication number: WO 2018/135419

(57) **Abstract**

Provided are: an ink composition for inkjet textile printing, which contains at least two kinds of yellow reactive dyes; and fibers which are dyed with this ink composition for inkjet textile printing. Also provided is a textile printing method for fibers, which comprises: an adhesion step wherein this ink composition for inkjet textile printing is used as an ink and droplets of the ink are ejected by an inkjet printer so as to adhere to fibers; a reactive fixing step wherein a dye in the ink, which has been caused to adhere to the fibers in the adhesion step, is reacted to be fixed to the fibers by means of heat; and a cleaning step wherein the dye remaining unfixed in the fibers is removed.

## Description

### TECHNICAL FIELD

The present invention relates to an ink composition for inkjet textile printing and a textile printing method for fibers using thereof.

### BACKGROUND ART

Inkjet textile printing for fibers using an inkjet printer, comparing to textile printing methods, such as screen textile printing, roller textile printing, and rotary textile printing, has many merits as follows:
(1) a plate-making step is unnecessary to shorten the process;
(2) a digitalized design can be directly printed through a computer;
(3) many varieties of products can be produced even if the number of each product is small; and
(4) waste liquid of dye color paste etc. can be greatly reduced. At the same time, inkjet textile printing has problems, such as a slower printing speed compared to conventional plate-making textile printings and a difficulty in reproduction of deep color, and is often used within manufacturing of sample rolls or small quantity.

In recent years, the printing speed of inkjet printer has been greatly improved by development in technologies of computer image processing and of manufacturing of industrial inkjet printheads. In addition, since the market has required digitalization of printing designs, diversification in printing processing, and a decrease in lot size, the industrial inkjet textile printing is progressively spreading.

Incidentally, reactive dyes are used in inkjet textile printing inks for dyeing cellulose fibers, such as cotton and rayon fibers. In reactive dyes, reactive groups that react with fibers and are present in the dye molecules react with groups present in fibers, such as hydroxy groups, to form covalent bonds between the dye and the fiber, and consequently the dye adheres to the fiber. However, in inkjet textile printing, since images are formed by ejecting ink droplets, inks to be used in conventional textile printing methods, such as screen textile printing, cannot be directly applied to inkjet textile printing. In order to secure inkjet characteristics, it is necessary to adjust not only the physical properties, such as the surface tension and viscosity of the ink, but also the solvent composition, the coloring material concentration, and so on. Due to such restrictions, in conventional inkjet textile printing, it is difficult to increase the dyeing concentration of dyed cloth, and various attempts have been made to solve these problems.

For example, Patent Document 1 proposes an ink containing a reactive dye and thiodiglycol as an ink for inkjet textile printing that provides textile printed cloth with a high concentration. In addition, Patent Documents 2 and 3 propose an ink containing a reactive dye and 1,2-alkanediol as an ink for inkjet textile printing that provides textile printed cloth with a high concentration. However, there is a limitation in increasing the concentration by adjusting the composition, such as solvent as described above, and an increase in the concentration of the reactive dye in an ink is required for a further high concentration.

In addition, in inkjet textile printing using a reactive dye, an ink set including basic four colors of black, yellow, magenta, and cyan is generally used. Since the reactive dye used in the yellow ink of the ink set has a molecular weight smaller than those of the reactive dyes used in other color inks, an increase in the dye concentration is apt to cause deposition of the dye during low-temperature storage or long-term storage, resulting in a risk of deteriorating the inkjet characteristics. Accordingly, it is significantly difficult to achieve both an increase in concentration and storage stability of the yellow ink.
Patent Document 1: Japanese Patent No. 3323549
Patent Document 2: Japanese Unexamined Patent Application, Publication No. 2004-292523
Patent Document 3: Japanese Unexamined Patent Application, Publication No. 2011-195675

### DISCLOSURE OF THE INVENTION

### Problems to be Solved by the Invention

It is an object of the present invention to provide an ink composition for inkjet textile printing that exhibits good storage stability even if the concentration of the reactive dye is increased, and a textile printing method for fibers using thereof.

### Means for Solving the Problems

The present inventors have diligently studied to solve the above-mentioned problems and as a result, accomplished the present invention described in the following aspects 1) to 20) :
1) An ink composition for inkjet textile printing containing at least two yellow reactive dyes.
2) The ink composition for inkjet textile printing according to aspect 1), wherein at least one of the yellow reactive dyes is a compound having a 1,3,5-triazine skeleton in the molecule.
3) The ink composition for inkjet textile printing according to aspect 2), wherein at least two of the yellow reactive dyes are compounds each having a 1,3,5-triazine skeleton in the molecule.
4) The ink composition for inkjet textile printing according to any one of aspects 1) to 3), wherein at least one of the yellow reactive dyes is a compound having an azo bond (-N=N-) in the molecule.
5) The ink composition for inkjet textile printing according to aspect 4), wherein at least two of the yellow reactive dyes are compounds each having an azo bond (-N=N-) in the molecule.
6) The ink composition for inkjet textile printing according to any one of aspects 1) to 5), wherein at least one of the yellow reactive dyes is a compound having a pyrazole skeleton in the molecule.
7) The ink composition for inkjet textile printing according to any one of aspects 1) to 6), containing at least one yellow reactive dye selected from C.I. Reactive Yellow 2 and C.I. Reactive Yellow 95.
8) The ink composition for inkjet textile printing according to aspect 7), containing C.I. Reactive Yellow 2 and C.I. Reactive Yellow 95.
9) The ink composition for inkjet textile printing according to aspect 8), wherein the content ratio of C.I. Reactive Yellow 2 and C.I. Reactive Yellow 95 is 2:8 to 5:5 on a mass basis.
10) The ink composition for inkjet textile printing according to aspect 9), wherein the content ratio of C.I. Reactive Yellow 2 and C.I. Reactive Yellow 95 is 3:7 to 5:5 on a mass basis.
11) The ink composition for inkjet textile printing according to any one of aspects 1) to 10), further containing at least one selected from a glycol organic solvent and a glycerol organic solvent, wherein the glycol organic solvent and the glycerol organic solvent have an average solubility parameter (SP) value of 14 to 19.
12) The ink composition for inkjet textile printing according to aspect 11), wherein the glycol organic solvent and the glycerol organic solvent have an average SP value of 15 to 18.
13) The ink composition for inkjet textile printing according to any one of aspects 1) to 12), wherein the content of the yellow reactive dye is 5 to 35 mass% based on the total mass of the ink composition.
14) The ink composition for inkjet textile printing according to any one of aspects 1) to 13), further containing at least one selected from urea and 2-pyrrolidone.
15) The ink composition for inkjet textile printing according to aspect 14), wherein the total content of urea and 2-pyrrolidone is 1 to 30 mass% based on the total mass of the ink composition.
16) The ink composition for inkjet textile printing according to any one of aspects 1) to 15), further containing a pH adjusting agent.
17) The ink composition for inkjet textile printing according to aspect 16), wherein the pH adjusting agent is tris(hydroxymethyl)aminomethane.
18) A textile printing method for fibers, including the steps of:
   ejecting droplets of the ink composition for inkjet textile printing according to any one of aspects 1) to 17) as an ink with an inkjet printer such that the ink adheres to fibers;
   reactively fixing the dyes in the ink adhered to the fibers by heat; and
   cleaning the fibers to remove unfixed dyes remaining in the fibers.
19) The textile printing method for fibers according to aspect 18), further including the step of:
   pre-treating the fibers before the adhesion of the ink by adhering an aqueous solution containing one or more of sizing agents, a pH adjusting agent for pre-treatment, and a hydrotropic agent to the fibers.
20) Fibers dyed with the ink composition for inkjet textile printing according to any one of aspects 1) to 17).

### Effects of the Invention

According to the present invention, it is possible to provide an ink composition for inkjet textile printing that exhibits good storage stability even if the concentration of the reactive dye is increased and a textile printing method for fibers using thereof.

### PREFERRED MODE FOR CARRYING OUT THE INVENTION

### <Ink composition>

The ink composition for inkjet textile printing (hereinafter, simply referred to as "ink composition") according to this embodiment contains at least two yellow reactive dyes. The ink composition having such a constitution exhibits good storage stability (in particular, low-temperature storage stability) even if the concentration of the reactive dye is increased.

Since reactive dyes having different reactivities, multiple reactive dyes are hardly used as a mixture. In some black ink compositions, multiple reactive dyes having different colors are mixed to secure absorption in a wide range of wavelengths, however, in other color ink compositions, even the need for mixing has not been considered. Under such background, the present inventors have found an effect of greatly increasing the storage stability (in particular, low-temperature storage stability) by mixing at least two yellow reactive dyes.

### [(A) Yellow reactive dye]

Examples of the yellow reactive dye (hereinafter, also referred to as "component (A)") include C.I. Reactive Yellow 1, 2, 3, 4, 6, 7, 15, 17, 18, 22, 23, 24, 24:1, 25, 27, 37, 38, 42, 51, 55, 57, 76, 81, 84, 85, 87, 88, 91, 92, 93, 95, 102, 105, 116, 134, 135, 136, 137, 138, 143, 145, 160, 161, 162, 163, 164, 168, 178, 202 and the like.

As the yellow reactive dyes, it is preferable that at least one yellow reactive dye is a compound having a 1,3,5-triazine skeleton in the molecule, and it is more preferable that at least two yellow reactive dyes are compounds each having a 1,3,5-triazine skeleton in the molecule. Examples of the compound having a 1,3,5-triazine skeleton in the molecule include C.I. Reactive Yellow 1, 2, 3, 4, 6, 7, 18, 22, 38, 51, 55, 81, 84, 85, 95, 102, 105, 134, 135, 138, 145, 161, 202 and the like.

In addition, as the yellow reactive dyes, it is preferable that at least one yellow reactive dye is a compound having an azo bond (-N=N-) in the molecule, and it is more preferable that at least two yellow reactive dyes are compounds each having an azo bond (-N=N-) in the molecule. Examples of compound having an azo bond (-N=N-) in the molecule include C.I. Reactive Yellow 1, 2, 3, 4, 6, 7, 15, 17, 18, 22, 23, 24, 24:1, 25, 27, 37, 38, 42, 51, 55, 57, 76, 81, 84, 85, 87, 88, 91, 92, 93, 95, 102, 105, 116, 134, 135, 136, 137, 138, 143, 145, 160, 161, 162, 163, 164, 168, 178, 202 and the like.

In addition, as the yellow reactive dye, it is preferable that at least one yellow reactive dye is a compound having a pyrazole skeleton in the molecule. Examples of the compound having a pyrazole skeleton in the molecule include C.I. Reactive Yellow 1, 2, 6, 18, 22, 38, 51, 55, 81, 105 and the like.

When two reactive dyes are used as the yellow reactive dyes, the content ratio thereof can be set within a range of 99.9:0.1 to 50:50 on a mass basis and is preferably within a range of 95:5 to 50:50.

The ink composition according to the embodiment preferably contains at least one yellow reactive dye selected from C.I. Reactive Yellow 2 and C.I. Reactive Yellow 95 and more preferably contains C.I. Reactive Yellow 2 and C.I. Reactive Yellow 95, and it is further preferable that the yellow reactive dye consists of C.I. Reactive Yellow 2 and C.I. Reactive Yellow 95.

When the ink composition according to the embodiment contains C.I. Reactive Yellow 2 and C.I. Reactive Yellow 95, the content ratio of C.I. Reactive Yellow 2 and C.I. Reactive Yellow 95 is preferably 2:8 to 5:5 and more preferably 3:7 to 5:5 on a mass basis.

The content of the yellow reactive dyes is preferably 5 to 35 mass% and more preferably 8 to 15 mass% based on the total mass of the ink composition.

### [(B) Glycol organic solvent and/or glycerol organic solvent]

The ink composition according to the embodiment may further contain at least one solvent (hereinafter, also referred to as "component (B)") selected from a glycol organic solvent and a glycerol organic solvent.

Examples of the glycol organic solvent include 1,2-glycol and dehydration-condensation products thereof. Specifically, the examples include ethylene glycol, diethylene glycol, triethylene glycol, tetraethylene glycol, polyethylene glycol, propylene glycol, dipropylene glycol, polypropylene glycol, 1,3-propanediol, 1,2-butanediol, 1,4-butanediol, 1,5-pentanediol, 1,6-hexanediol, 1,2,6-hexanetriol and the like.

Examples of the glycerol organic solvent include glycerol and dehydration-condensation products and addition polymerization products thereof. Specifically, the examples include glycerol, diglycerol, triglycerol, polyglycerol, polyoxyethylene glycerol (i.e., ethylene oxide additive of glycerol), polyoxypropylene glycerol (i.e., propylene oxide additive of glycerol), polyoxyethylene diglyceryl ether (i.e., ethylene oxide additive of glycerol), polyoxypropylene diglyceryl ether (i.e., propylene oxide additive of glycerol) and the like.

The glycol organic solvent and the glycerol organic solvent preferably have an average SP value of 14 to 19 and more preferably 15 to 18. When the average SP value is 14 or more, the storage stability of the ink composition tends to be improved, and when the average SP value is 19 or less, dyeing tends to be hardly inhibited.

Here, the SP value in the present specification is a value determined by a Fedors method, and the unit thereof is (cal/cm³)^{1/2}. In addition, the average SP value is the total of the values obtained by multiplying the respective SP values of organic solvents by the content (on a mass basis) of the organic solvents based on the total amount of the ink composition. For example, when the composition of the organic solvents contained in the ink composition is composed of only two components, 10 mass% of ethylene glycol (SP value: 17.83) and 20 mass% of propylene glycol (SP value: 15.91), the average SP value of the organic solvents contained in the ink composition is 16.55 (=(17.83 × 0.1 + 15.91 × 0.2)/(0.1 + 0.2)).

When the ink composition according to the embodiment contains at least one solvent selected from a glycol organic solvent and a glycerol organic solvent, the total content of the glycol organic solvent and the glycerol organic solvent is preferably 1 to 50 mass% and more preferably 5 to 40 mass% based on the total mass of the ink composition.

### [(C) Urea and/or 2-pyrrolidone]

The ink composition according to the embodiment may further contain at least one compound (hereinafter, also referred to as "component (C)") selected from urea and 2-pyrrolidone. The storage stability of the ink composition tends to be improved by containing these compounds. The ink composition according to the embodiment preferably contains both urea and 2-pyrrolidone.

When the ink composition according to the embodiment contains at least one compound selected from urea and 2-pyrrolidone, the total content of urea and 2-pyrrolidone is preferably 1 to 30 mass%, more preferably 5 to 25 mass%, and further preferably 10 to 25 mass% based on the total mass of the ink composition.

### [(D) pH adjusting agent]

The ink composition according to the embodiment may further contain a pH adjusting agent (hereinafter, also referred to as "component (D)").

Examples of the pH adjusting agent include hydroxides of alkali earth metals, such as sodium hydroxide, potassium hydroxide, and lithium hydroxide; and tertiary amines, such as triethanolamine, diethanolamine, dimethylethanolamine, diethylethanolamine, and tris(hydroxymethyl)aminomethane, and preferably mono-, di-, or tri(C1-C4)alkylamine that is optionally substituted with a hydroxy group, and the like. Among these pH adjusters, tris(hydroxymethyl)aminomethane is preferred.

When the ink composition according to the embodiment contains a pH adjusting agent, the content of the pH adjusting agent is usually 0.05 to 3 mass%, preferably 0.05 to 2.5 mass%, and more preferably 0.08 to 2 mass% based on the total mass of the ink composition.

### [Water]

The ink composition according to the embodiment is an aqueous ink composition and contains water. As the water, deionized water is generally used. In particular, since unpurified water contains metal ions, such as calcium ions and magnesium ions, when such water is used for preparing an ink, the ink contains the ions, although the amount thereof is small. In the present specification, such metal ions and inorganic salts are referred to as "inorganic impurities" for convenience. Since these inorganic impurities deteriorate the solubility and storage stability of the reactive dye, a smaller amount thereof is better.

### [Other components]

The ink composition according to the embodiment may contain, in addition to the above-mentioned components, ink preparation agents, such as an antiseptic and antifungal agent, a chelating agent, an rust-preventive agent, a UV absorbing agent, a viscosity adjusting agent, a dye-dissolving agent, an anti-fading agent, a surface tension adjusting agent, a defoaming agent, and a water-soluble organic solvent (excluding components (B) and (C)). These ink preparation agents may be used alone or in combination two or more.

### (Antiseptic and antifungal agent)

Examples of the antiseptic and antifungal agent include organic sulfur-based, organic nitrogen sulfur-based, organic halogen-based, haloallyl sulfone-based, iodopropargyl-based, N-haloalkylthio-based, benzothiazole-based, nitrile-based, pyridine-based, 8-oxyquinoline-based, isothiazoline-based, dithiol-based, pyridine oxide-based, nitropropane-based, organic tin-based, phenol-based, quaternary ammonium salt-based, triazine-based, thiadiazine-based, anilide-based, adamantane-based, dithiocarbamate-based, brominated indanone-based, benzyl bromoacetate-based, inorganic salt-based compounds and the like. Examples of the organic halogen-based compound include sodium pentachlorophenol. Examples of the pyridine oxide-based compound include sodium 2-pyridinethiol-1-oxide. Examples of the isothiazoline-based compound include 1,2-benzisothiazolin-3-one, 2-n-octyl-4-isothiazolin-3-one, 5-chloro-2-methyl-4-isothiazolin-3-one, 5-chloro-2-methyl-4-isothiazolin-3-one magnesium chloride, 5-chloro-2-methyl-4-isothiazolin-3-one calcium chloride, 2-methyl-4-isothiazolin-3-one calcium chloride and the like. Other examples of the antiseptic and antifungal agent include sodium acetate, sodium sorbate, sodium benzoate, and Proxel^{RTM} GXL (S) and Proxel^{RTM} XL-2 (S), tradenames, manufactured by Arch Chemical, Inc. Incidentally, superscript RTM means registered trademark.

### (Chelating agent)

Examples of the chelating agent include disodium ethylenediaminetetraacetate, sodium nitrilotriacetate, sodium hydroxyethylethylenediaminetriacetate, sodium diethylenetriaminepentaacetate, sodium uracil diacetate and the like.

### (Rust-preventive agent)

Examples of the rust-preventive agent include hydrogen sulfite, sodium thiosulfate, ammonium thioglycolate, diisopropylammonium nitrite, pentaerythritol tetranitrate, dicyclohexylammonium nitrite and the like.

### (UV absorbing agent)

Examples of the UV absorbing agent include benzophenone compounds, benzotriazole compounds, cinnamic acid compounds, triazine compounds, stilbene compounds and the like. In addition, for example, compounds absorbing ultraviolet light and emitting fluorescence, such as benzoxazole compounds, so-called fluorescent whiteners, can also be used.

### (Viscosity adjusting agent)

Examples of the viscosity adjusting agent include water-soluble polymer compounds, such as polyvinyl alcohol, cellulose derivatives, polyamines, and polyimines, in addition to water-soluble organic solvents.

### (Dye dye-dissolving agent)

Examples of the dye dye-dissolving agent include ε-caprolactam and ethylene carbonate, in addition to urea.

### (Anti-fading agent)

The anti-fading agent is used for improving the storage stability of images. As the anti-fading agent, a variety of organic and metal complex-based anti-fading agents can be used. Examples of the organic anti-fading agent include hydroquinones, alkoxyphenols, dialkoxyphenols, phenols, anilines, amines, indanes, chromans, alkoxyanilines, heterocycles and the like. Examples of the metal complex-based anti-fading agent include nickel complexes, zinc complexes and the like.

### (Surface tension adjusting agent)

Examples of the surface tension adjusting agent include surfactants. Examples of the surfactant include anionic surfactants, nonionic surfactants, cationic surfactants, and ampholytic surfactants.

Examples of the anionic surfactant include alkylsulfocarboxylates; α-olefinsulfonates; polyoxyethylenealkyl ether acetates; N-acylamino acid and a salt thereof; N-acylmethyltaurine salt; alkylsulfate polyoxyalkyl ether sulfate; alkylsulfate polyoxyethylene alkyl ether phosphate; rosin acid soap; castor oil sulfate ester salt; lauryl alcohol sulfate ester salt; alkylphenol-type phosphate ester; alkyl-type phosphate ester; alkylarylsulfonate; sulfosuccinic acid-based surfactants, such as diethyl sulfosuccinate, diethylhexyl sulfosuccinate, dioctyl sulfosuccinate; and the like. The anionic surfactant is preferably a sulfosuccinic acid-based surfactant, and commercially available examples thereof include Lipal (tradename) series 8351, 860K, 870P, NTD, and MSC manufactured by Lion Corporation; Adeka Kol (tradename) EC8600 manufactured by Adeka Corporation; Pelex (tradename) series OT-P, CS, TA, and TR manufactured by Kao Corporation; Rikamild series ES-100 and ES-200 and Rikasurf series P-10, M-30, M-75, M-300, G-30, and G-600 manufactured by New Japan Chemical Co., Ltd.; and Kohacool series L-300, L-40, L-400, and NL-400 manufactured by Toho Chemical Industry Co., Ltd.

When the ink composition according to the embodiment contains an anionic surfactant, the content thereof is usually 0.05 to 2 mass%, preferably 0.05 to 1.5 mass%, more preferably 0.05 to 1 mass%, and further preferably 0.1 to 0.5 mass% based on the total mass of the ink composition.

Examples of the nonionic surfactant include ethers, such as polyoxyethylene nonylphenyl ether, polyoxyethylene octylphenyl ether, polyoxyethylene dodecylphenyl ether, polyoxyethylene oleyl ether, polyoxyethylene lauryl ether, and polyoxyethylene alkyl ether; esters, such as polyoxyethylene oleic acid ester, polyoxyethylene distearic acid ester, sorbitan laurate, sorbitan monostearate, sorbitan monooleate, sorbitan sesquioleate, polyoxyethylene monooleate, and polyoxyethylene stearate; acetylene alcohols, such as 3,5-dimethyl-1-hexyn-3-ol; and acetylene glycols, such as 2,4,7,9-tetramethyl-5-decyne-4,7-diol, 3,6-dimethyl-4-octyne-3,6-diol, and Surfynol (tradename) series 104, 104PG50, 82, 420, 440, 465, and 485 and Olfine STG manufactured by Air Products Co., Ltd. Among these surfactants, acetylene glycols and acetylene alcohols are preferred, and acetylene glycols are more preferred.

When the ink composition according to the embodiment contains a nonionic surfactant, the content thereof is usually 0.05 to 2 mass%, preferably 0.05 to 1.5 mass%, more preferably 0.05 to 1 mass%, and further preferably 0.1 to 0.5 mass% based on the total mass of the ink composition.

Examples of the cationic surfactant include 2-vinylpyridine derivatives, poly(4-vinylpyridine) derivatives and the like.

Examples of the ampholytic surfactant include lauryl dimethylaminoacetic acid betaine, 2-alkyl-N-carboxymethyl-N-hydroxyethyl imidazolinium betaine, coconut oil fatty acid amidopropyl dimethylamino acetic acid betaine, polyoctyl polyaminoethyl glycine, imidazoline derivatives and the like.

### (Defoaming agent)

Examples of the defoaming agent include highly oxidized oil-based compounds, glycerine fatty acid ester-based compounds, fluorine-based compounds, silicone-based compounds and the like.

### [Physical properties of ink composition]

The ink composition according to the embodiment usually has a surface tension at 25°C of 25 to 70 mN/m, preferably 25 to 60 mN/m. In addition, the ink composition according to the embodiment preferably has a viscosity at 25°C of 30 mPa·s or less, more preferably 20 mPa·s or less.

When the ink composition according to the embodiment is used in a printer equipped with an industrial inkjet head, in order to improve the high-speed continuous ejection under a low-temperature environment, the dynamic surface tension measured by a maximum foaming pressure method at 5°C and 10 Hz is preferably 25 to 45 mN/m and more preferably 30 to 40 mN/m. The dynamic surface tension and measurement thereof are disclosed in Japanese Unexamined Patent Application Publication Nos. 2007-154142 and 2007-162006.

### [Method for preparing ink composition]

The ink composition according to the embodiment is prepared by mixing the above-described components and stirring them until solid components, such as reactive dyes, are dissolved. The addition order of the components is not limited. The water to be used in the preparation of the ink composition is, as described above, water containing less inorganic impurities, such as distilled water or deionized water.

The ink composition according to the embodiment is preferably a filtrate free from contaminants by precise filtration using, for example, a membrane filter. The pore size of the filter for the precise filtration is usually 0.1 to 1 µm and preferably 0.1 to 0.8 µm. In addition, the content of inorganic impurities is usually 1 mass% or less, preferably 0.1 mass% or less, and more preferably 0.01 mass% or less based on the total mass of the ink composition according to the embodiment. The lower limit can be below the detection limit of the detection instrument, i.e., 0 mass%. After the removal of inorganic impurities, the dye concentration is adjusted to a desired level by dilution or concentration to obtain an ink composition.

In addition, for full color textile printing, an ink set including yellow, red, blue, and optionally black inks as basic colors can be prepared. Furthermore, inks having various hues, such as orange, brown, violet, and green are prepared and can be used as an ink set.

### <Textile printing method for fibers and dyed fibers>

The textile printing method for fibers according to the embodiment uses the ink composition according to the embodiment as an ink and prints for fibers (preferably, cellulose fibers or polyamide fibers) using the ink. More specifically, it is preferable to print for a fabric mainly made of cellulose fibers or polyamide fibers. Examples of the cellulose fiber include natural fibers, such as cotton and hemp; regenerated cellulose fibers, such as rayon; mixed spun fibers containing them; and the like. Examples of the polyamide fiber include natural polyamide fibers, such as silk and wool; synthetic polyamide fibers, such as nylon; mixed spun fibers containing them; and the like.

Examples of the textile printing method for fibers include a method comprising the following three steps.

### (Adhesion step)

The ink composition according to the embodiment is used as an ink, and droplets of the ink are ejected by an inkjet printer and are adhered to fibers.

### (Reactive fixing step)

The dye in the ink adhered to the fibers in the adhesion step is reactively fixed to the fibers by heat.

### (Cleaning step)

The fibers are cleaned to remove unfixed dyes remaining in the fibers.

The inkjet printer is not particularly limited in the ink nozzle, etc. and can be appropriately selected according to the purpose.

The adhesion step is, for example, a method in which a container filled with the ink composition according to the embodiment is mounted on a predetermined position of an inkjet printer, and ink droplets are ejected according to a recoding signal to adhere to fibers. The reactive fixing step is, for example, a method in which the fibers to which the ink has been adhered are left to stand at normal temperature to 150°C for 0.5 to 30 minutes for pre-drying and are then subjected to a steaming treatment. The conditions for the steaming treatment is, for example, leaving to stand under an environment of a humidity of 80% to 100% and a temperature of 95°C to 105°C for 5 to 40 minutes. The cleaning step is, for example, a method in which the fibers subjected to the steaming treatment are washed with water. The water to be used for cleaning may contain a surfactant. The fibers after washing away the unfixed dyes are dried at 50°C to 120°C for 5 to 30 minutes to give dyed fibers.

The textile printing method for fibers according to the embodiment may include a pre-treatment step for the fibers as a step to be performed before the adhesion step. In the pre-treatment step, for example, an aqueous solution as a pre-treatment solution containing one or more of sizing agents, a pH adjusting agent for pre-treatment, and a hydrotropic agent are adhered to the fibers. Although this pre-treatment step is not essential, since an effect of preventing bleeding of the dyes in textile printing may be obtained, a textile printing method sequentially performing the four steps including the pre-treatment step is preferable.

Incidentally, the purpose of use of the pH adjusting agent contained in the pre-treatment solution is the same as that of the pH adjusting agent contained in the ink composition according to the embodiment, but the preferred examples thereof are different from each other. Accordingly, in the present specification, the pH adjusting agent contained in the ink composition is simply referred to "pH adjusting agent" and the pH adjusting agent contained in the pre-treatment solution is referred to as "pH adjusting agent for pre-treatment" to distinguish the both pH adjusting agents.

Examples of the sizing agent include natural gums, such as guar and locust bean; starches; sodium alginate; seaweed, such as funori; plant peels, such as pectic acid; cellulose derivatives, such as methyl cellulose, ethyl cellulose, hydroxyethyl cellulose, and carboxymethyl cellulose; processed starches, such as carboxymethyl starch; processed natural gums, such as Shiraz gum and roast bean gum; synthetic pastes, such as polyvinyl alcohol and polyacrylic acid esters; and the like. Among these, sodium alginate is preferred as the sizing agent to be used in the pre-treatment of cellulose fibers. In addition, the sizing agent to be used in the pre-treatment of polyamide fibers is preferably a natural gum, such as guar or locust bean; or a processed natural gum, such as Shiraz gum or roast bean gum.

As the pH adjusting agent for pre-treatment, a pH adjusting agent suitable for the fibers is selected. The pH adjusting agent to be used in the pre-treatment of cellulose fibers is preferably a pH adjusting agent that exhibits alkalinity when made into an aqueous solution, and examples thereof include alkali metal salts of inorganic or organic acids; salts of alkaline earth metals; compounds which liberate alkali when heated; and the like. In particular, alkali metal hydroxides and alkali metal salts of inorganic or organic acids are preferred. Specifically, examples thereof include sodium hydroxide, calcium hydroxide, sodium carbonate, sodium bicarbonate, potassium carbonate, sodium formate, and sodium phosphate, and preferred is sodium bicarbonate. The pH adjusting agent to be used in the pre-treatment of polyamide fibers is preferably a pH adjusting agent that exhibits acidity when made into an aqueous solution, and examples thereof include acidic ammonium salts, such as ammonium sulfate, ammonium tartrate, and ammonium acetate, and preferred is ammonium sulfate.

Examples of the hydrotropic agent include urea; alkylurea, such as dimethylurea; thiourea; and alkylthiourea, such as monomethylthiourea, and dimethylthiourea, and preferred is urea.

The above-mentioned sizing agents, pH adjusting agents for pre-treatment, and hydrotropic agents may be respectively used alone or in combination of two or more.

It is difficult to unconditionally determine the content of the sizing agent, the pH adjusting agent for pre-treatment, and the hydrotropic agent by, for example, the ratios of mixed spinning in each of cellulose fibers and polyamide fibers, however, as a rough indication, the content of the sizing agent, the pH adjusting agent for pre-treatment, and the hydrotropic agent are 0.5 to 5 mass%, 0.5 to 5 mass%, and 1 to 20 mass%, respectively, based on the total mass of the pre-treatment solution, and the balance is water.

The method for adhering the pre-treatment solution to fibers is, for example, a padding method. The drawing rate of padding is preferably about 40% to 90% and more preferably about 60% to 80%.

The fibers printed with the ink composition according to the embodiment are excellent in the balance of color saturation, dyeing concentration, color variation, and light resistance. In addition, the fibers are excellent in various performances, for example, other fastness tests, such as color fastness to water and color fastness to washing, the color tone, and the wide color reproduction area. The ink composition can also exhibit ejection performance, regardless of frequency value, with a printer equipped with an industrial inkjet head requiring a high-viscosity ink. Furthermore, the ejection performance is good also when ejection (textile printing) is started again with the printer left to stand for a fixed time after inkjet textile printing. Accordingly, the ink composition according to the embodiment and the textile printing method using the ink composition are significantly suitable for textile printing for fibers.

### EXAMPLES

The present invention will now be specifically described in more detail by examples, but is not limited to the following examples. Incidentally, the "part(s)" and "%" in the following examples mean part(s) by mass and mass%, respectively, unless otherwise specified.

### [(1) Preparation of ink]

The components shown in Table 1 were mixed and stirred for about 1 hour until each solvent component was uniformly dissolved and were then filtered through a membrane filter with a pore size of 0.45 µm (tradename: Cellulose Acetate Filter Paper, manufactured by Advantec Co., Ltd.) to prepare inks of Examples 1 to 4 and Comparative Example 1.

Abbreviations in Table 1 have the following meanings:
RY2: C.I. Reactive Yellow 2,
RY95: C.I. Reactive Yellow 95,
EG: ethylene glycol,
PG: propylene glycol,
Gly: glycerol,
2-Py: 2-pyrrolidone,
SF440: Surfynol 440 (acetylene glycol surfactant),
GXL: Proxel GXL, and
THMAM: tris(hydroxymethyl)aminomethane

**[Table 1]**

| | Example 1 | Example 2 | Example 3 | Example 4 | Comparative Example 1 |
|---|---|---|---|---|---|
| RY2 | 3 | 2 | 4 | 5 | 0 |
| RY95 | 7 | 8 | 6 | 5 | 10 |
| EG | 5 | 5 | 5 | 5 | 5 |
| PG | 15 | 15 | 15 | 15 | 15 |
| Gly | 5 | 5 | 5 | 5 | 5 |
| Urea | 10 | 10 | 10 | 10 | 10 |
| 2-Py | 10 | 10 | 10 | 10 | 10 |
| SF440 | 0.3 | 0.3 | 0.3 | 0.3 | 0.3 |
| GXL | 0.1 | 0.1 | 0.1 | 0.1 | 0.1 |
| THMAM | 0.1 | 0.1 | 0.1 | 0.1 | 0.1 |
| H₂O | 44.5 | 44.5 | 44.5 | 44.5 | 44.5 |
| Total | 100 | 100 | 100 | 100 | 100 |

### [(2) Low-temperature storage stability]

The low-temperature storage stability of the inks of Examples 1 to 4 and Comparative Example 1 were evaluated. The inks were stored at -15°C for 7 days and then left to stand at room temperature for several hours, and the low-temperature storage stability was evaluated based on the following criteria. The results are shown in Table 2.

### (Evaluation criteria)

A: No dye precipitation and ink gelation were observed;
B: Dye precipitation was slightly observed, but ink gelation was not observed; and
C: Dye precipitation was considerably observed, or ink gelation was observed.

**[Table 2]**

| | Example 1 | Example 2 | Example 3 | Example 4 | Comparative Example 1 |
|---|---|---|---|---|---|
| Low-temperature storage stability | A | B | A | A | C |

As obvious from the results shown in Table 2, it was verified that the inks of Examples 1 to 4 have excellent low-temperature storage stability compared to that of the ink of Comparative Example 1.

## Claims

1. An ink composition for inkjet textile printing comprising at least two yellow reactive dyes.

2. The ink composition for inkjet textile printing according to claim 1, wherein at least one of the yellow reactive dyes is a compound having a 1,3,5-triazine skeleton in the molecule.

3. The ink composition for inkjet textile printing according to claim 2, wherein at least two of the yellow reactive dyes are compounds each having a 1,3,5-triazine skeleton in the molecule.

4. The ink composition for inkjet textile printing according to any one of claims 1 to 3, wherein at least one of the yellow reactive dyes is a compound having an azo bond (-N=N-) in the molecule.

5. The ink composition for inkjet textile printing according to claim 4, wherein at least two of the yellow reactive dyes are compounds each having an azo bond (-N=N-) in the molecule.

6. The ink composition for inkjet textile printing according to any one of claims 1 to 5, wherein at least one of the yellow reactive dyes is a compound having a pyrazole skeleton in the molecule.

7. The ink composition for inkjet textile printing according to any one of claims 1 to 6, comprising at least one yellow reactive dye selected from C.I. Reactive Yellow 2 and C.I. Reactive Yellow 95.

8. The ink composition for inkjet textile printing according to claim 7, comprising C.I. Reactive Yellow 2 and C.I. Reactive Yellow 95.

9. The ink composition for inkjet textile printing according to claim 8, wherein the content ratio of C.I. Reactive Yellow 2 and C.I. Reactive Yellow 95 is 2:8 to 5:5 on a mass basis.

10. The ink composition for inkjet textile printing according to claim 9, wherein the content ratio of C.I. Reactive Yellow 2 and C.I. Reactive Yellow 95 is 3:7 to 5:5 on a mass basis.

11. The ink composition for inkjet textile printing according to any one of claims 1 to 10, further comprising at least one selected from a glycol organic solvent and a glycerol organic solvent, wherein the glycol organic solvent and the glycerol organic solvent have an average solubility parameter (SP) value of 14 to 19.

12. The ink composition for inkjet textile printing according to claim 11, wherein the glycol organic solvent and the glycerol organic solvent have an average SP value of 15 to 18.

13. The ink composition for inkjet textile printing according to any one of claims 1 to 12, wherein the content of the yellow reactive dyes is 5 to 35 mass% based on the total mass of the ink composition.

14. The ink composition for inkjet textile printing according to any one of claims 1 to 13, further comprising at least one selected from urea and 2-pyrrolidone.

15. The ink composition for inkjet textile printing according to claim 14, wherein the total content of urea and 2-pyrrolidone is 1 to 30 mass% based on the total mass of the ink composition.

16. The ink composition for inkjet textile printing according to any one of claims 1 to 15, further comprising a pH adjusting agent

17. The ink composition for inkjet textile printing according to claim 16, wherein the pH adjusting agent is tris(hydroxymethyl)aminomethane.

18. A textile printing method for fibers, comprising the steps of:
ejecting droplets of the ink composition for inkjet textile printing according to any one of claims 1 to 17 as an ink with an inkjet printer such that the ink adheres to fibers;
reactively fixing the dyes in the ink adhered to the fibers by heat; and
cleaning the fibers to remove unfixed dyes remaining in the fibers.

19. The textile printing method for fibers according to claim 18, further comprising the step of:
pre-treating the fibers before the adhesion of the ink by adhering an aqueous solution containing one or more of sizing agents, a pH adjuster for pre-treatment, and a hydrotropic agent to the fibers.

20. Fibers dyed with the ink composition for inkjet textile printing according to any one of claims 1 to 17.
